Europäisches Patentamt

European Patent Office

Office européen des brevets

(19)

(11) Veröffentlichungsnummer: **0 259 405**
**B1**

(12) **EUROPÄISCHE PATENTSCHRIFT**

(45) Veröffentlichungstag der Patentschrift: **16.01.91**

(21) Anmeldenummer: **87901421.5**

(22) Anmeldetag: **31.01.87**

(86) Internationale Anmeldenummer:
**PCT/EP87/00047**

(87) Internationale Veröffentlichungsnummer:
**WO 87/04647 13.08.87 Gazette 87/18**

(51) Int. Cl.⁵: **B 21 J 15/06,** F 16 H 25/18,
G 05 G 1/02

(54) BETÄTIGUNGSEINRICHTUNG FÜR NIETSETZWERKZEUG.

(30) Priorität: **05.02.86 DE 3603421**

(43) Veröffentlichungstag der Anmeldung:
**16.03.88 Patentblatt 88/11**

(45) Bekanntmachung des Hinweises auf die
Patenterteilung:
**16.01.91 Patentblatt 91/03**

(84) Benannte Vertragsstaaten:
**DE FR GB IT SE**

(56) Entgegenhaltungen:
**DE-A-3 330 891**
**FR-A-2 301 319**
**GB-A-2 100 644**

**Revue Technique Diesel, Nr. 117, September-
Oktober 1982 (Boulogne-Billancourt, FR), Seite
105**

(73) Patentinhaber: **ALFRED HONSEL NIETEN- UND
METALLWARENFABRIK GMBH & CO.
Westicker Strasse 46-52
D-5758 Fröndenberg (DE)**

(72) Erfinder: **SCHWAB, Manfred
Adolfstrasse 4B
D-6204 Taunusstein 2 (DE)**

(74) Vertreter: **Blumbach Weser Bergen Kramer
Zwirner Hoffmann Patentanwälte
Sonnenberger Strasse 100
D-6200 Wiesbaden 1 (DE)**

Anmerkung: Innerhalb von neun Monaten nach der Bekanntmachung des Hinweises auf die Erteilung des europäischen
Patents im Europäischen Patentblatt kann jedermann beim Europäischen Patentamt gegen das erteilte europäische
Patent Einspruch einlegen. Der Einspruch ist schriftlich einzureichen und zu begründen. Er gilt erst als eingelegt,
wenn die Einspruchsgebühr entrichtet worden ist (Art. 99(1) Europäisches Patentübereinkommen).

EP 0 259 405 B1

**Beschreibung**

Die Erfindung betrifft eine Betätigungseinrichtung für Nietsetzwerkzeuge zum Setzen von Gewindenietmuttern oder Blindnietmuttern mit einer für einen Stauchvorgang betätigbaren, einem Gewindebolzen bzw. Zugbolzen eine axiale Bewegung erteilenden Vorschubeinrichtung, die eine aus einem Druckkolben und einem Arbeitskolben bestehende Zylinder-Kolben-Anordnung besitzt, wobei ein Drücker durch Druckausübung eine Steuerventilstange bewegt, welche Verbindungsöffnungen für ein Druckmittel im Werkzeug öffnet bzw. schließt, wobei seine untere, rückwärtige Kante mit der oberen Stirnfläche der Ventilstange in Berührung kommt.

Derartige Werkzeuge bestehen aus einem Geräteteil, in dem der Arbeitskolben mit einer Arbeitskolbenstange angeordnet ist, und einem Griffteil, in welchem sich der Druckkolben mit Druckkammer befindet.

Aus der GB—A—2 100 644 ist eine Betätigungseinrichtung zum Setzen von Gewindenietmuttern oder Blindnietmuttern bekannt, die eine für den für den Staubvorgang betätigbaren, dem Gewindebolzen bzw. Zugbolzen eine axiale Bewegung erteilende Vorschubeinrichtung aufweist. Die Vorschubeinrichtung besitzt eine aus einem Druckkolben und einem Arbeitskolben bestehende Zylinderkolbenanordnung, wobei ein Drücker durch Druckausübung eine Steuerventilstange bewegt, welche Verbindungsöffnungen für ein Druckmittel im Werkzeug öffnet bzw. schließt, wobei seine untere Kante mit der oberen Stirnfläche der Steuerventilstange in Berührung kommt.

Es ist bekannt, zur Steuerung des Druckmittels im Griffteil einen Drücker vorzusehen, der sich an der Stelle befindet, wo der Griffteil in den Geräteteil übergeht. Dabei wirkt der Drücker auf eine im Griffteil sich längs erstreckende Steuerventilstange, deren oberes Ende gelenkig über einen Zwischenhebel mit dem Drücker verbunden ist. Der Drücker selbst ist um einen Bolzen bewegbar und verschiebt beim Eindrücken über den Zwischenhebel die Ventilstange. Dabei ist es nachteilig, daß bei der Betätigung des Drückers gewisse Druckpunkte überwunden werden müssen, die dadurch entstehen, daß die Schwenkbewegung des Drückers über den Zwischenhebel in eine translatorische Bewegung umgewandelt werden muß. Außerdem ist die Konstruktion verhältnismäßig störanfällig und bei der Montage kompliziert.

Der Erfindung liegt daher die Aufgabe zugrunde, eine Betätigungseinrichtung für ein Nietsetzwerkzeug verfügbar zu machen, bei dem die Betätigung erleichtert ist und die Zuverlässigkeit der Betätigungseinrichtung verbessert und deren Montage wesentlich einfacher ist.

Die Erfindung besteht darin, daß bei einer Betätigungseinrichtung der eingangs genannten Art der Drücker in einer Richtung schräg zur Achse der Steuerventilstange bewegbar ist und daß am Drücker (15) eine oder mehrere in Seiner Längsrichtung angeordnete Aussparungen vorgesehen sind, in die zugeordnete, im Gehäuse sitzende Schrauben wahlweise in Eingriff bringbar sind, so daß die Bewegungsmöglichkeit des Drückers begrenzt ist, um verschiebene Steuerbewegungen der Steuerventilstange zu ermöglichen.

Dabei ist zweckmäßig der Drücker in schräg zur Achse der Steuerventilstange laufenden Führungen bewegbar.

Mit Vorteil können diese Führungen zylinderartig den Drücker umgeben, oder aber die Führungen können auch aus parallel angeordneten Führungsbahnen bestehen.

Um den Drücker in seine Ausgangslage zurückzubewegen, ist die Rückseite des Drückers mittels einer Feder gegen das Gehäuse des Werkzeugs abgestützt.

Zweckmäßigerweise kann die Feder aus einer Schraubfeder bestehen.

Gemäß einer vorteilhaften Ausführungsform weist der Drücker eine bohrungsartige Aushöhlung auf, in der die Feder sitzt.

Um die Druckkraft am Drücker verändern zu können, kann die Federkraft einstellbar sein.

Dabei kann eine zweckmäßige Ausführungsform darin bestehen, daß beide Seiten des Drükkers Aussparungen aufweisen, in die am Gehäuse festgelegte Schrauben eingreifen.

Um die Verschleißanfälligkeit zu verringern, kann vorgesehen sein, daß die mit dem Stößel in Berührung kommende Kante am Drücker verstärkt, z.B. hartverchromt, ist.

Die Erfindung soll nachstehend anhand von Ausführungsbeispielen unter Bezugnahme auf die beigefügten Zeichnungen näher erläutert werden.

In den Zeichnungen zeigen:

Fig. 1 ein Nietsetzwerkzeug im Schnitt, das mit der erfindungsgemäßen Betätigungseinrichtung ausgestattet ist;

Fig. 2 eine Schnittansicht der Betätigungseinrichtung in einem vergrößerten Maßstab;

Fig. 3 eine Schnittansicht entsprechend der nach Fig. 2, wobei der Drücker in betätigter Stellung dargestellt ist.

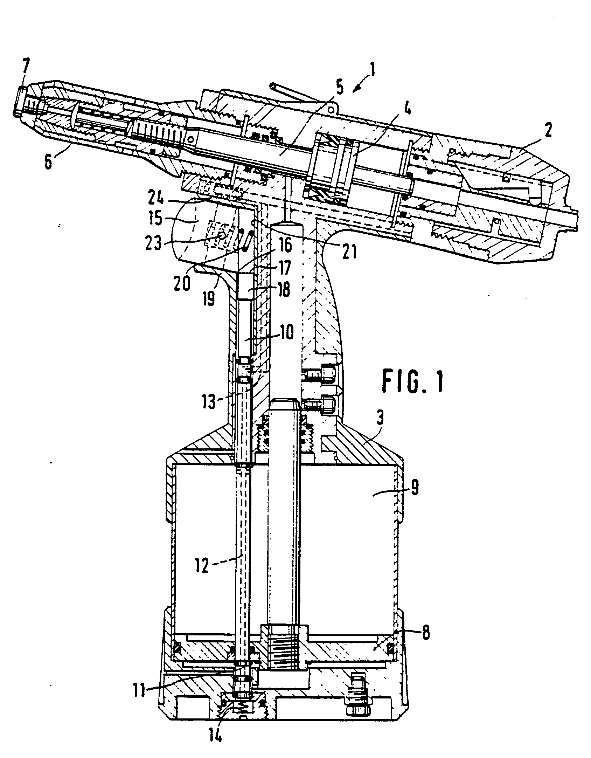

In Fig. 1 ist ein Nietsetzwerkzeug 1 dargestellt, das aus einem Geräteteil 2 und einem Griffteil 3 besteht. Im Geräteteil 2 sitzt ein Arbeitskolben 4 mit einer Arbeitskolbenstange 5, die auf das Mundstück 6 am vorderen Ende des Geräteteils 2 einwirkt, um die Arbeitsvorgänge mit den Nieten 7 durchzuführen.

Im Griffteil 3 sitzt ein Druckkolben 8, der in einer Druckkammer 9 sitzt.

Zur Betätigung des Nietsetzwerkzeugs 1 dient eine Steuerventilstange 10, die an ihrem unteren Ende 11 mit Ventilsitzen ausgestattet ist und einen Ventilstangenkanal 12 aufweist, der an seinem oberen Ende mit einer Bohrung 13 im Griffteil fluchten kann, so daß eine Verbindung von der Druckkammer 9 zum Arbeitskolben 4 hergestellt werden kann. Auf diese Weise ist es möglich, über die Steuerventilstange 10 durch deren Bewegung die Druckmittelzufuhr aus der Druckkammer 9 im Griffteil 3 zum Arbeitskolben 4 im Geräteteil 2 zu steuern. Diese Vorgänge sind im einzelnen nicht Gegenstand der Erfindung und in der deutschen Patentanmeldung P 35 32 932.7 dargelegt.

Um der Steuerventilstange 10 eine Steuerbewegung in Fig. 1 nach unten gegen die Kraft der Feder 14 im Griffteil zu erteilen, ist ein Drücker 15 schräg zur Achse der Steuerventilstange 10 angeordnet und schräg, d.h. unter einem Winkel zur Achse der Steuerventilstange 10, bewegbar. Die untere, rückwärtige Kante 16 des Drückers 15 kommt mit der oberen Stirnfläche 17 des Endstücks 18 der Ventilstange 10 in Berührung, so daß bei der Bewegung des Drückers 15 die untere, rückwärtige Kante 16 auf die Stirnfläche 17 des Endstücks 18 der Ventilstange 10 einen Druck ausübt und diese nach unten gegen die Feder 14 bewegt.

Die Führung 19 des Drückers 15 kann zylinderartig diesen umgeben und im Gehäuse ausgeformt sein. Es ist aber auch möglich, daß die Führung des Drückers 19 aus parallel angeordneten Führungsbahnen besteht. Die Rückseite des Drückers 15 ist mittels einer Feder 20 an der Gehäusewand 21 des Griffteils 3 abgestützt.

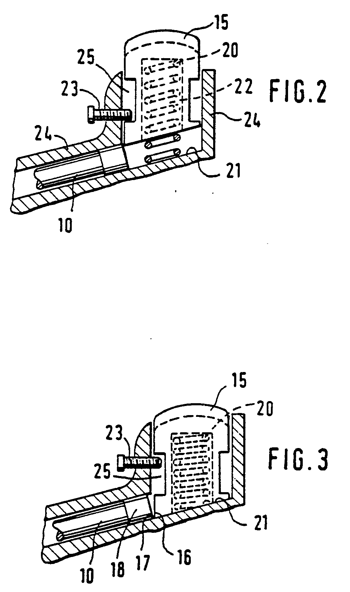

Wie insbesondere aus den Fig. 2 und 3 zu ersehen ist, stützt sich der Drücker 15 mit Hilfe einer Schraubenfeder 20 an der Gehäusewand 21 ab, wobei die Schraubenfeder 20 in einer nach hinten offenen Bohrung 22 im Drücker 15 sitzt.

Wie in Fig. 2 dargestellt ist, hat die Schraubenfeder 20 das Bestreben, den Drücker 15 von der Gehäusewand 21 wegzubewegen. Diese Bewegung wird begrenzt durch eine Schraube 23 die im Gehäuse 24 des Griffteils 3 sitzt und in eine Ausnehmung 25 eingreift und somit verhindert, daß der Drücker 15 aus seiner vom Gehäuse 24 gebildeten Führung herausgleitet.

Fig. 3 zeigt die Stellung, die der Drücker 15 einnimmt, wenn er gegen die Kraft der Schraubenfeder 20 hineingedrückt ist, die dabei zusammengedrückt wird. Die hintere, untere Kante 16 des Drückers 15 gleitet bei der Bewegung von der Stellung nach Fig. 2 in die Stellung nach Fig. 3 auf der Stirnfläche 17 des Endstücks 18 entlang und drückt dabei die Steuerventilstange nach unten, d.h. sie erteilt der Steuerventilstange 10 in den Fig. 2 und 3 eine Bewegung nach links. Die Ausnehmung 25 ist groß genug, um die Bewegung zuzulassen, ohne daß die Schraube 23 hinderlich ist, und sobald der Drücker 15 losgelassen wird. dehnt sich die Schraubenfeder 20 aus und bewegt den Drücker von der Gehäusewand 21 weg, bis er wieder die in Fig. 2 dargestellte Lage einnimmt. Dabei verhindert die Schraube 23 das Herausfallen des Drückers 15 aus seinen Führungen bzw. dem Gehäuse des Griffteils 3.

Die Federkraft der Schraubenfeder 20 kann einstellbar ausgestaltet werden. was im einzelnen nicht dargestellt ist. um die Kraft veränderlich zu gestalten, mit der der Drücker 15 zu betätigen ist.

Die Aussparung 25 kann, wie in den Fig. 2 und 3 dargestellt ist, umlaufend am Drücker 15 vorgesehen sein, es ist aber auch möglich, auf beiden Seiten des Drückers Aussparungen mit im Gehäuse sitzenden, eingreifenden Schrauben 23 vorzusehen.

Um verschiedene Steuerbewegungen der Steuerventilstange 10 mit Hilfe des Drückers 15 zu ermöglichen, kann vorgesehen sein, daß in Längsrichtung des Drückers 15 mehrere hintereinander angeordnete Aussparungen 25 angeordnet sind, in die im Gehäuse 24 sitzende Schrauben 23 wahlweise einbringbar sind.

Die hintere, untere Kante 16 des Drückers 15 kann verstärkt sein. z.B. durch Hartverchromung, um einen vorzeitigen Verschleiß zu verhindern.

**Patentansprüche**

1. Betätigungseinrichtung für Nietsetzwerkzeuge (1) zm Setzen von Gewindenietmuttern oder Blindnietmuttern, mit einer für einen Stauchvorgang betätigbaren, einem Gewindebolzen bzw. Zugbolzen eine axiale Bewegung erteilenden Vorschubeinrichtung, die eine aus einem Druckkolben (8) und einem Arbeitskolben (4) bestehende Zylinder-Kolben-Anordnung besitzt, wobei ein Drücker (15) durch Druckausübung eine Steuerventilstange (10) bewegt, welche Verbindungsöffnungen für ein Druckmittel im Werkzeug öffnet bzw. schließt, wobei seine untere, rückwärtige Kante (16) mit der oberen Stirnfläche (17) der Ventilstange (10) in Berührung kommt, dadurch gekennzeichnet, daß der Drücker (15) in einer Richtung schräg zur Achse der Steuerventilstange (10) bewegbar ist und daß am Drücker (15) eine oder mehrere in Seiner Längsrichtung angeordnete Aussparungen (25) vorgesehen sind, in die zugeordnete, im Gehäuse (24) sitzende Schrauben (23) wahlweise in Eingriff bringbar sind, so daß die Bewegungsmöglichkeit des Drükkers (15) begrenzt ist, um verschiedene Steuerbewegungen der Steuerventilstange (10) zu ermöglichen.

2. Betätigungseinrichtung nach Anspruch 1, dadurch gekennzeichnet, daß der Drucker (15) in schräg zur Achse der Steuerventilstange (10) laufenden Führungen (24) bewegbar ist.

3. Betätigungseinrichtung nach Anspruch 2, dadurch gekennzeichnet, daß die Führungen (24) zylinderartig den Drücker (15) umgeben.

4. Betätigungseinrichtung nach Anspruch 2, dadurch gekennzeichnet, daß die Führungen (24) aus parallel angeordneten Führungsbahnen bestehen.

5. Betätigungseinrichtung nach einem der Ansprüche 1 bis 4, dadurch gekennzeichnet, daß die Rückseite des Drückers (15) mittels einer Feder (20) gegen das Gehäuse (21) abgestützt ist.

6. Betätigungseinrichtung nach Anspruch 5, dadurch gekennzeichnet, daß die Feder aus einer Schraubenfeder (20) besteht.

7. Betätigungseinrichtung nach Anspruch 5 oder 6, dadurch gekennzeichnet, daß der Drücker eine bohrungsartige Aushöhlung (22) aufweist, in der die Feder (20) sitzt.

8. Betätigungseinrichtung nach einem der Ansprüche 5 bis 7, dadurch gekennzeichnet, daß die Kraft der Feder (20) einstellbar ist.

9. Betätigungseinrichtung nach einem der Ansprüche 1 bis 8, dadurch gekennzeichnet, daß auf beiden Seiten des Drückers (15) Aussparungen (25) mit im Gehäuse (24) sitzenden, eingreifenden Schrauben (23) vorgesehen sind.

10. Betätigungseinrichtung nach einem der Ansprüche 1 bis 9, dadurch gekennzeichnet, daß die mit der Steuerventilstange (10) in Berührung kommende Kante (16) des Drückers (15) verstärkt, z.B. hartverchromt, ist.

**Revendications**

1. Dispositif d'actionnement pour outils de rivetage (1) servant à la pose d'écrous de rivets filetés ou d'écrous de rivets borgnes, comportant un dispositif d'avance pouvant être actionné en vue d'un processus de refoulement, qui communique un mouvement axial à une tige filetée ou à un tirant et qui possède un système à cylindre et piston constitué d'un piston de pression (8) et d'un piston de travail (4), dans lequel une détente (15) met en mouvement, lorsqu'une pression est exercée sur elle, une tige (10) de soupape de commande qui ouvre ou ferme des orifices de communication pour un fluide sous pression contenu dans l'outil, le bord inférieur arrière (16) de la détente entrant alors en contact avec la face frontale (17) supérieure de la tige de soupape (10), caractérisé en ce que la détente (15) est mobile dans une direction oblique par rapport à l'axe de la tige (10) de soupape de commande, et qu'il est prévu sur la détente (15) un ou plusieurs évidements (25) disposés dans sa direction longitudinale, dans lesquels peuvent venir s'engager à volonté des vis (23) coordonnées, logées dans le boîtier (24), de manière que la liberté de mouvement de la détente (15) soit limitée afin de permettre différents mouvements de manoeuvre de la tige (10) de soupape de commande.

2. Dispositif d'actionnement suivant la revendication 1, caractérisé en ce que la détente (15) est mobile dans des guides (24) s'étendant obliquement par rapport à la tige (10) de soupape de commande.

3. Dispositif d'actionnement suivant la revendication 2, caractérisé en ce que les guides (24) entourent la détente (15) à la manière d'un cylindre.

4. Dispositif d'actionnement suivant la revendication 2, caractérisé en ce que les guides (24) sont constitués de voies de guidage à disposition parallèle.

5. Dispositif d'actionnement suivant l'une des revendications 1 à 4, caractérisé en ce que la face postérieure de la détente (15) prend appui au moyen d'un ressort (20) contre le boîtier (21).

6. Dispositif d'actionnement suivant la revendication 5, caractérisé en ce que le ressort est constitué d'un ressort hélicoïdal (20).

7. Dispositif d'actionnement suivant la revendication 5 ou 6, caractérisé en ce que la détente présente un évidement (22) en forme d'alésage, dans lequel est logé le ressort (20).

8. Dispositif d'actionnement suivant l'une des revendications 5 à 7, caractérisé en ce que la force du ressort (20) est réglable.

9. Dispositif d'actionnement suivant l'une des revendications 1 à 8, caractérisé en ce qu'il est prévu, des deux côtés de la détente (15), des encoches (25) dans lesquelles s'engagent des vis (23) logées dans le boîtier (24).

10. Dispositif d'actionnement suivant l'une des revendications 1 à 9, caractérisé en ce que le bord (16) de la détente (15) qui entre en contact avec la tige (10) de soupape de commande est renforcé, par exemple par chromage dur.

**Claims**

1. A device for actuating rivet-setting tools (1) for setting threaded rivet nuts or blind rivet nuts, the device comprising a feed device actuated for a compression process and imparting axial motion to a threaded bolt or tension bolt and comprising a cylinder-piston arrangement made up of a pressure piston (8) and a working piston (4), a trigger (15) exerting pressure so as to move a control valve stem (10) which opens or closes connecting openings for a pressure medium in the tool, its lower rear edge (16) coming into contact with the upper end face (17) of the valve stem (10), characterised in that the trigger (15) is movable in a direction at an angle to the axis of the control valve stem (10) and the trigger (15) is formed with one or more longitudinal recesses (25) into which associated screws (23) disposed in the casing (24) can optionally be brought into engagement, thus limiting the mobility of the trigger (15) for varying the control motions of the control valve stem (10).

2. An actuating device according to claim 1, characterised in that the trigger (15) is movable in guides (24) extending at an angle to the axis of the control valve stem (10).

3. An actuating device according to claim 2, characterised in that the guides (24) are disposed in the form of a cylinder surrounding the trigger (15).

4. An actuating device according to claim 2, characterised in that the guides (24) comprise parallel guideways.

5. An actuating device according to any of claims 1 to 4, characterised in that the back of the trigger (15) is braced by a spring (20) against the casing (21).

6. An actuating device according to claim 5, characterised in that the spring is a helical spring (20).

7. An actuating device according to claim 5 or 6, characterised in that the trigger has a bore-like recess (22) containing the spring (20).

8. An actuating device according to any of claims 5 to 7, characterised in that the force of the spring (20) is adjustable.

9. An actuating device according to any of claims 1 to 8, characterised in that both sides of the trigger (15) are formed with recesses (25) with engaging screws (23) disposed in the casing (24).

10. An actuating device according to any of claims 1 to 9, characterised in that the edge of the trigger (15) coming into contact with the control valve stem (10) is reinforced, e.g. hard chromium-plated.

FIG. 1

FIG.2

FIG.3